# EUROPÄISCHE PATENTSCHRIFT

(11) **EP 1 389 370 B1**
(45) Veröffentlichungstag und Bekanntmachung des Hinweises auf die Patenterteilung: **10.08.2005**
(21) Anmeldenummer: 02760167.3
(22) Anmeldetag: 22.05.2002
(51) Int. Cl.: H04B 7/26, H04B 3/54, H04J 3/06

(54) **MOBILFUNK-KOMMUNIKATIONSSYSTEM MIT REFERENZSIGNALGEBER UND VERFAHREN ZUR BASISSTATIONSSYNCHRONISIERUNG**
MOBILE RADIO COMMUNICATION SYSTEM WITH REFERENCE SIGNAL EMITTER AND METHOD FOR BASE STATION SYNCHRONISATION
SYSTEME DE COMMUNICATION DE TELEPHONIE MOBILE COMPRENANT UN EMETTEUR DE SIGNAUX DE REFERENCE ET PROCEDE DE SYNCHRONISATION DE STATIONS DE BASE

(30) Priorität: 23.05.2001 EP 01112582; 23.05.2001 DE 10125390
(43) Veröffentlichungstag der Anmeldung: 18.02.2004
(73) Patentinhaber: SIEMENS AKTIENGESELLSCHAFT, 80333 München (DE)
(72) Erfinder: HAUTH, Stephan, 89081 Ulm (DE); HERTEL, Günther, 82223 Eichenau (DE)
(86) Internationale Anmeldenummer: PCT/EP2002/005618
(87) Internationale Veröffentlichungsnummer: WO 2002/100004

(56) Entgegenhaltungen:
- EP-A- 0 560 237
- EP-A- 0 896 442
- EP-A- 1 003 293
- WO-A-01/91347
- DE-A- 19 536 587
- PATENT ABSTRACTS OF JAPAN vol. 016, no. 322 (E-1233), 14. Juli 1992 (1992-07-14) -& JP 04 094226 A (MATSUSHITA ELECTRIC IND CO LTD), 26. März 1992 (1992-03-26)
- PATENT ABSTRACTS OF JAPAN vol. 012, no. 250 (E-633), 14. Juli 1988 (1988-07-14) -& JP 63 038334 A (NEC CORP), 18. Februar 1988 (1988-02-18)
- PATENT ABSTRACTS OF JAPAN vol. 002, no. 127 (E-066), 25. Oktober 1978 (1978-10-25) -& JP 53 093721 A (NEC CORP), 17. August 1978 (1978-08-17)

## Beschreibung

Die Erfindung betrifft ein Mobilfunk-Kommunikationssystem mit einem Referenzsignalgeber zur Synchronisation von Basisstationen mit Funknetz-Steuereinrichtungen gemäß dem Oberbegriff des Patentanspruchs 1.

Die Erfindung betrifft außerdem ein Verfahren zur Synchronisierung von Basisstationen eines Mobilfunk-Kommunikationssystems nach dem Oberbegriff des Patentanspruchs 15.

Mobilfunk-Kommunikationssysteme umfassen in der Regel ein Kernnetz und ein Funk-Kommunikationsnetz mit zumindest einer Funknetz-Steuereinrichtung, an der mehrere Basisstationen (BA) angebunden sind, die mit mobilen Stationen (UE) über Funk kommunizieren und die über ein Stromnetz mit Energie versorgt werden.

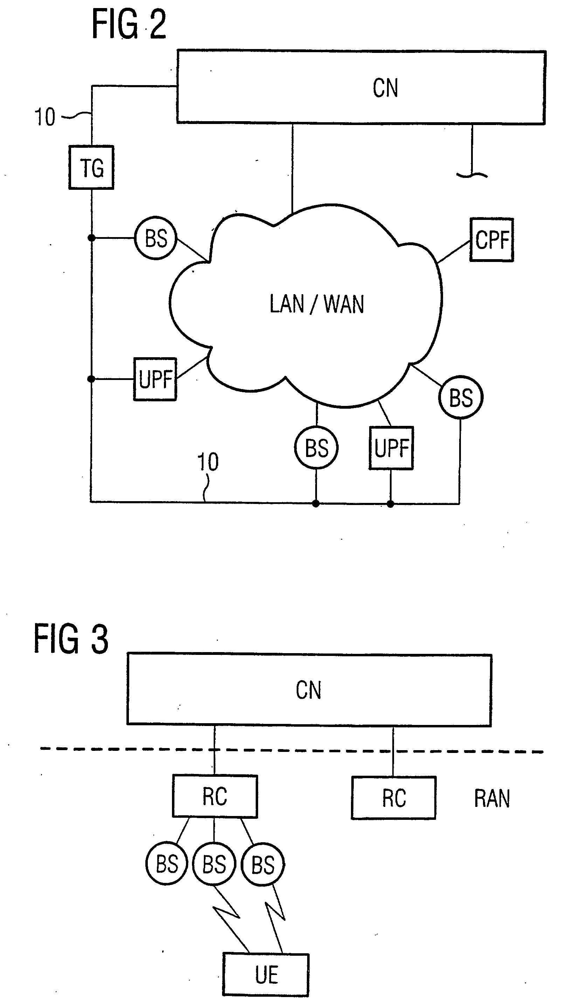

Mobilfunk-Kommunikationssysteme können in ein Kernnetz CN, in dem Nutz- und Signalisierungsdaten einer Vielzahl von Endgeräten über weite Strecken leitungsgebunden befördert werden, und ein Funkzugangsnetz (RAN: Radio Access Network) aufgeteilt werden, welches im Allgemeinen eine Mehrzahl von physikalischen Netzwerkknoten, insbesondere Funknetz-Steuereinrichtungen RC (RC: Radio Controller) umfasst, deren Aufgabe es ist, von den Endgeräten empfangene Daten in ein für die Übertragung auf dem Kernnetz CN geeignetes Format umzusetzen und umgekehrt das Format der vom Kernnetz empfangenen Daten an die Funkübertragung anzupassen und an diejenige Basisstation BS weiterzuleiten, in deren Sendebereich sich das betreffende Endgerät befindet. Ein solches Kommunikationssystem ist in Fig. 3 gezeigt.

Die zu leitenden Daten umfassen einerseits Nutzdaten, d.h. Daten, die zwischen zwei Benutzern (von denen mindestens einer eine mobile Station nutzt) übermittelt werden sollen, und andererseits Signalisierungsdaten, die zur Steuerung interner Vorgänge des Mobilfunk-Kommunikationssystems erzeugt und verarbeitet werden.

Im Funkzugangsnetz RAN kann zwischen Funktionalitäten, die für die Übertragung von Nutzdaten, und Funktionalitäten, die für die Übertragung und Verarbeitung der Signalisierungsdaten verantwortlich sind, unterschieden werden. Erstere werden als Teilnehmerebenenfunktionen (UPF: User Plane Functions) und letztere als Steuerebenenfunktionen (CPF: Control Plane Functions) bezeichnet.

Die Kommunikation einer Basisstation BS mit einer mobilen Station UE erfolgt über Mehrfachkanalzugriffsverfahren, wie z.B. GSM (Global System for Mobile Communications) oder UMTS (Universal Mobile Telecommunications System), die einer Vielzahl von mobilen Stationen UE ermöglichen, parallel zueinander eine Funkverbindung aufzubauen und für einen Datenaustausch mit entfernten Einrichtungen zu benutzen.

Um eine störende Überlagerung der Signale der vielen Funkverbindungen zu verhindern, findet die Kommunikation z.B. über eindeutig zugeordnete Frequenzen innerhalb fest zugeordneter Zeitschlitze und/oder mit Hilfe kodierter Signale statt.

Zum Senden der Daten, zur Verarbeitung der empfangenen Signale und zur Rückerkennung der Daten aus einem empfangenen Signal benötigen die Basisstationen als auch die Funknetz-Steuereinrichtungen ein stabiles Zeit-Referenzsignal (Synchronisationssignal). Dieses Referenzsignal wird bisher üblicherweise von der Funknetz-Steuereinrichtung zusammen mit den Nutzdaten leitungsgebunden oder per Richtfunk an eine Basisstation BS übertragen oder wird aus dem Verbindungsnetz (z.B. einem Telephonnetz) generiert. Dieses Signal kann auch am Ort der Basisstationen durch genaue Uhren oder über ein Satellitensystem (GPS) erzeugt werden. Die Vor-Ort-Erzeugung ist aber aufwändig und teuer.

Erfolgt die Kommunikation zwischen einer Basisstation und der Funknetz-Steuereinrichtung jedoch mittels eines Paketversand-Netzes, (z.B. mittels Internetprotokoll (IP)), also über ein Datennetz, wie beispielsweise ein Ethernet-LAN (Local Area Network)oder ein asynchrones WAN (Wide Area Network), so ist es auf Grund von Verzögerungen zwischen einzelnen Übertragungswegen und auf Grund des Einflusses von Störgrößen oftmals nicht mehr gewährleistet, dass das Synchronisationssignal aus der Übertragungsleitung regeneriert werden kann. Dies gilt z. B. für Basisstationen, die über ein LAN in Gebäuden an die Funknetz-Steuereinrichtung angeschlossen sind. Diese LANs unterstützen die Übertragung des Zeit-Referenzsignals nicht immer (z. B. Ethernet).

Aus der EP 0 560 237 A2 ist ein Verfahren zur Synchronisierung von Basisstationen in einem Funktelefonsystem bekannt, welches aus einer Vermittlungsanlage, an die im allgemeinen drahtgebundene Endgeräte angeschlossen sind, und mindestens einer Basisstation, von der aus über Funk schnurlose Endgeräte Zugriff zu der Vermittlungsanlage haben, besteht. Der mobile Teil des Systems wirkt aus Sicht der Vermittlungsanlage wie eine Anzahl von Teilnehmern, die über analoge oder digitale Leitungsschnittstellen mit der Vermittlungsanlage verbunden sind. Das Funktelefonsystem betrifft eine nicht-öffentliche Nebenstellenanlage, welche beispielsweise nach dem DECT-Protokoll (Digital European Cordless Telecommunication) arbeitet. Bei mehreren Basisstationen in einem solchen System ist es erforderlich, für alle gleichzeitig abwechselnd eine Zeitdauer zum Senden und eine Zeitdauer zum Empfangen vorzusehen, damit bei sich überlappenden Funkbereichen zweier oder mehrerer Basisstationen eine Störung der Teilnehmer untereinander ausgeschlossen wird. In dem Funktelefonsystem erfolgt die Gleichstromversorgung der Basisstationen von einer Vermittlungsanlage über Kabel. In der Vermittlungsanlage wird die Speisespannung für die Basisstationen mit einer Synchronisierungsspannung moduliert, und zwar derart, dass alle Basisstationen im Takt der Synchronisierungsspannung in einen Sendezustand und in einen Empfangszustand geschaltet werden. Die modulierte Speisespannung wird über Kabel jeweils zu den Basisstationen übertragen und dort demoduliert. Der Anschluss des Funktelefonsystems an ein Kernnetz ist in der EP 0 560 237 A2 nicht vorgesehen. Eine Synchronisierung von Basisstationen in einem modernen Mobilfunk-Kommunikationssystem mit seinen wesentlich größeren räumlichen Ausmaßen ist mit einem Verfahren nach der EP 0 560 237 A2 nicht möglich.

Es ist daher die Aufgabe der vorliegenden Erfindung, eine einfache Möglichkeit zur Übertragung eines Synchronisationssignals insbesondere für ein Mobilfunk-Kommunikationssystem zu schaffen, bei dem die Basisstationen über ein asynchrones Datennetz an eine Funknetz-Steuereinrichtung angebunden sind.

Gelöst wird diese Aufgabe durch die im Patentanspruch 1 und 15 angegebenen Merkmale. Weitere Ausführungsformen der Erfindung sind Gegenstand von Unteransprüchen.

Der wesentliche erfinderische Gedanke besteht darin, das Synchronisationssignal über das Stromnetz an die Basisstationen des Systems zu übertragen. Hierbei ist die Anbindung der Basisstationen an die Funknetz-Steuereinrichtung separat vom Stromnetz vorhanden.

Das Stromnetz, über das die Basisstationen mit Energie versorgt werden, betrifft typischerweise eine Wechselspannungsversorgung der Basisstationen. Dies bringt wesentliche Vorteile in Mobilfunk-Kommunikationssystemen mit großer räumlicher Erstreckung, d.h. wenn die Basisstationen ein weiträumig verteiltes Netzwerk aufspannen.

Insbesondere ist vorteilhaft, ein öffentliches Stromnetz für die Übertragung des Synchronisationssignals über das Stromnetz an die Basisstationen des Systems einzusetzen.

Ein gattungsgemäßes Mobilfunk-Kommunikationssystem mit einem Kernnetz und einem Funkzugangsnetz mit zumindest einer Funknetz-Steuereinrichtung, an der mehrere Basisstationen angebunden sind, umfasst daher einen Taktgeber, mit dem ein Synchronisationssignal über das Stromnetz übertragen wird.

Das Synchronisationssignal ist vorzugsweise ein reines Taktsignal, kann aber auch ein Synchronisationsbefehl sein, der eine Identifikationskennung beinhaltet, die vom Empfänger erkannt wird.

Das Synchronisations- bzw. Taktsignal dient dabei der Synchronisation einer Funknetz-Steuereinrichtung mit einer Basisstation. Vorzugsweise werden aber auch die Basisstationen untereinander mit Hilfe des Taktsignals synchronisiert.

Der erfindungsgemäße Taktgeber ist dabei vorzugsweise am Standort der Funknetz-Steuereinrichtung angeordnet und überträgt das Synchronisationssignal an die Basisstationen sowie direkt an die Taktbaugruppe der Funknetz-Steuereinrichtung. Der Taktgeber kann aber auch an jedem beliebigen anderen Ort angeordnet sein und das Referenzsignal über das Stromnetz an eine Funknetz-Steuereinrichtung und die daran angebundenen Basisstationen übertragen.

Das Synchronisationssignal kann entweder vom Taktgeber selbst erzeugt oder von einem anderen Signal abgeleitet sein, das z.B. vom Kernnetz oder vom RC eingespeist wird.

Gemäß einer bevorzugten Ausführungsform der Erfindung sind mehrere Basisstationen über ein asynchrones Datennetz, insbesondere ein LAN oder WAN, an eine Funknetz-Steuereinrichtung angeschlossen.

Die Funknetz-Steuereinrichtung kann auch eine verteilte Architektur aufweisen, wobei mehrere Teilnehmerebenenfunktionen UPF oder Steuerebenenfunktionen CPF einzeln am Datennetz angeschlossen sind. Dabei werden zumindest die Teilnehmerebenenfunktionen mit dem Synchronisationssignal versorgt.

Gemäß einer speziellen Ausgestaltung der Erfindung haben die Basisstationen einen Synchronisationssignalempfänger, der das Synchronisationssignal an der Spannungsversorgung abgreift und an die Taktbaugruppe der Basisstationen weiterleitet.

Die Erfindung entfaltet ihre großen Vorteile vor allem in öffentlichen Mobilfunk-Kommunikationssystemen. Insbesondere kann das Mobilfunk-Kommunikationssystem so ausgebildet sein, dass es Standards der zweiten Generation (2G) wie beispielsweise GSM (Global System for Mobile Communication), Standards der erweiterten zweiten Genreration (2G+) wie beispielsweise GPRS (General Packet Radio Service), Standards der dritten Generation (3G) wie beispielsweise UMTS (Universal Mobile Telecommunication System) [oder andere mit CDMA- oder TD/CDMA-Übertragungsverfahren] und/oder höhere Standards (beyond 3G) unterstützt bzw. nach einem oder mehreren der genannten Standards arbeitet.

Die Erfindung wird nachstehend anhand der beigefügten Zeichnungen beispielhaft näher erläutert. Es zeigen:
Figur 1 ein Mobilfunk-Kommunikationssystem gemäß einer Ausführungsform der Erfindung;
Figur 2 ein Mobilfunk-Kommunikationssystem gemäß einer anderen Ausführungsform der Erfindung; und
Figur 3 ein bekanntes Mobilfunk-Kommunikationssystem.

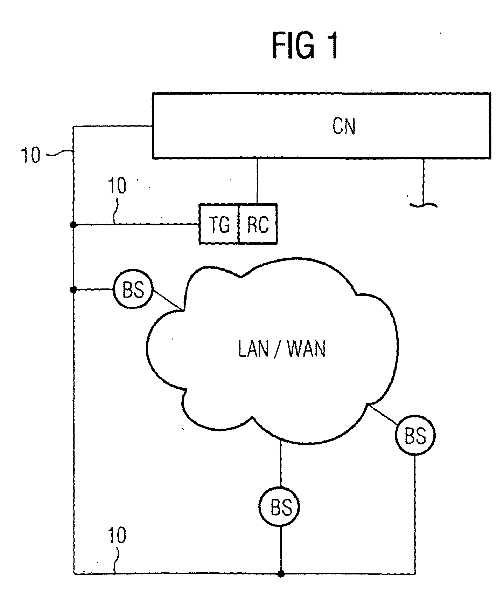

Das in Figur 1 dargestellte Mobilfunk-Kommunikationssystem umfasst ein Kernnetz CN und ein Funkzugangsnetz RAN. Das Funkzugangsnetz RAN hat mehrere Funknetz-Steuereinrichtungen RC mit einer Vielzahl von Basisstationen BS.

Die Anbindung der Basisstationen BS an die Funknetz-Steuereinrichtung erfolgt unter Ausnutzung eines Datennetzes wie z.B. eines asynchronen LAN oder WAN, das z. B. IP-basiert sein kann.

Am Standort der Funknetz-Steuereinrichtung ist ein Taktgeber TG vorgesehen, der ein Synchronisationssignal an die einzelnen Basisstationen BS über das Stromnetz 10 ausgibt. Das Synchronisationssignal kann außerdem direkt an die Taktbaugruppe der Funknetz-Steuereinrichtung weitergeleitet werden.

Die einzelnen Basisstationen haben einen Synchronisationssignalempfänger, der das Synchronisationssignal an der Stromversorgung abgreift und an die Taktbaugruppe der Basisstation BS weiterleitet

Eine weitere, in Fig. 2 gezeigte, Ausgestaltung des RAN stellt die Aufteilung der Funknetz-Steuereinrichtung RC in räumlich getrennte Teilnehmerebenenfunktionen UPF (UPF: User Plane Functions) und Steuerebenenfunktionen CPF (CPF: Control Plane Functions) dar. Die Teilnehmerebenenfunktionen dienen insbesondere zur Übertragung von Sprache und Daten einer mobilen Station UE während die Steuerebenenfunktionen Verwaltungsaufgaben im System übernehmen.

Der Taktgeber TG ist im Dargestellten Beispiel an einem beliebigen Ort angeordnet. Dies ist bei einer konzentrierten RC möglich, bei einer in UPF/CPF aufgeteilten Funknetz-Steuereinrichtung nötig - hier gibt der Taktgeber TG dann neben den Basisstationen BS auch an die UPF das Synchronisationssignal über das Stromnetz 10 aus.

Die mit dem Referenzsignal versorgten Einrichtungen haben einen Synchronisationssignalempfänger, der das Synchronisationssignal abgreift und an nachfolgende Schaltkreise weiterleitet.

Das Synchronisationssignal braucht insbesondere nicht verschlüsselt zu werden.

Bezüglich Figur 3 wird auf die Eingangs gemachten Erläuterungen verwiesen.

### Bezugszeichenliste

### Stromnetz

- CN: Kernnetz
- RC: Funknetz-Steuereinrichtung
- TG: Taktgeber
- LAN: Local Area Network
- WAN: Wide Area Network
- BS: Basisstation
- UPF: Teilnehmerebenenfunktion
- CPF: Steuerebenenfunktion
- UE: Mobile Station
- RAN: Funkzugangsnetz

## Patentansprüche

1. Mobilfunk-Kommunikationssystem, umfassend ein Kernnetz (CN) und ein Funk-Kommunikationsnetz (RAN) mit zumindest einer Funknetz-Steuereinrichtung (RC), an der mehrere Basisstationen (BS) angebunden sind, die mit mobilen Stationen (UE) über Funk kommunizieren und über ein Stromnetz (10) mit Energie versorgt werden,
**dadurch gekennzeichnet,**
**dass** ein Taktgeber (TG) vorgesehen ist, mit dem ein Synchronisationssignal zur Synchronisation der Basisstationen (BS) mit der zugehörigen Funknetz-Steuereinrichtung (RC) über das Stromnetz (10) übertragen wird,
wobei die Anbindung der Basisstationen (BS) an die Funknetz-Steuereinrichtung (RC) separat vom Stromnetz (10) vorhanden ist.

2. Mobilfunk-Kommunikationssystem nach Anspruch 1
**dadurch gekennzeichnet,**
**dass** das Stromnetz (10) ein öffentliches Stromnetz ist.

3. Mobilfunk-Kommunikationssystem nach Anspruch 1 oder 2
**dadurch gekennzeichnet,**
**dass** das Synchronisationssignal ein Taktsignal ist.

4. Mobilfunk-Kommunikationssystem nach Anspruch 1, 2 oder 3
**dadurch gekennzeichnet,**
**dass** die Basisstationen durch ein vom Signal- bzw. Taktgeber (TG) zugeführtes Synchronisationssignal untereinander synchronisiert sind.

5. Mobilfunk-Kommunikationssystem nach Anspruch 1 oder 2
**dadurch gekennzeichnet,**
**dass** der Taktgeber (TG) am Standort der Funknetz-Steuereinrichtung (RC) angeordnet ist und das Synchronisationssignal über das Stromnetz (10) an die zugehörigen Basisstationen (BS) übertragen wird.

6. Mobilfunk-Kommunikationssystem nach Anspruch 1 oder 2
**dadurch gekennzeichnet,**
**dass** der Taktgeber (TG) separat vom übrigen System angeordnet ist und das Synchronisationssignal über das Stromnetz (10) an die Basisstationen (BS) übermittelt wird.

7. Mobilfunk-Kommunikationssystem nach einem der vorhergehenden Ansprüche
**dadurch gekennzeichnet,**
**dass** das Synchronisationssignal von der Funknetz-Steuereinrichtung (RC) erzeugt und an den Taktgeber (TG) geleitet oder vom Taktgeber (TG) an die Funknetz-Steuereinrichtung (RC) geleitet wird.

8. Mobilfunk-Kommunikationssystem nach einem der vorhergehenden Ansprüche
**dadurch gekennzeichnet,**
**dass** die Basisstationen (BS) einen Synchronisationssignalempfänger aufweisen, der das Synchronisationssignal an der Stromversorgung abgreift und an die Taktbaugruppe der Basisstationen (BS) weiterleitet.

9. Mobilfunk-Kommunikationssystem nach einem der vorhergehenden Ansprüche
**dadurch gekennzeichnet,**
**dass** mehrere Basisstationen (BS) über ein Datennetz (LAN/WAN) an eine Funknetz-Steuereinrichtung angebunden sind und über das Stromnetz synchronisiert werden.

10. Mobilfunk-Kommunikationssystem nach Anspruch 9
**dadurch gekennzeichnet,**
**dass** mehrere Teilnehmerebenenfunktionen (UPF) oder Steuerebenenfunktionen (CPF) am Datennetz (LAN/WAN) angeschlossen sind.

11. Mobilfunk-Kommunikationssystem nach Anspruch 10
**dadurch gekennzeichnet,**
**dass** zumindest die Teilnehmerebenenfunktionen (UPF) mit dem Synchronisationssignal versorgt werden.

12. Mobilfunk-Kommunikationssystem nach einem der Ansprüche 9 bis 11,
**dadurch gekennzeichnet,**
**dass** das Datennetz (LAN/WAN) auf einem Paketversand-Protokoll, z. B. dem Internetprotokoll (IP) basiert.

13. Mobilfunk-Kommunikationssystem nach Anspruch 1, 2 oder 4,
**dadurch gekennzeichnet,**
**dass** der Taktgeber (TG) Bestandteil des Kernnetzes (CN) ist.

14. Mobilfunk-Kommunikationssystem nach einem der vorhergehenden Ansprüche,
**dadurch gekennzeichnet,**
**dass** das Mobilfunk-Kommunikationssystem so ausgebildet ist, dass es Standards der zweiten Generation, Standards der erweiterten zweiten Genreration, Standards der dritten Generation und/oder höhere Standards unterstützt.

15. Verfahren zur Synchronisierung von Basisstationen (BS) eines Mobilfunk-Kommunikationssystems, welches ein Kernnetz (CN) und ein Funk-Kommunikationsnetz (RAN) mit zumindest einer Funknetz-Steuereinrichtung (RC), an der mehrere Basisstationen (BS) angebunden sind, die mit mobilen Stationen (UE) über Funk kommunizieren und über ein Stromnetz (10) mit Energie versorgt werden, umfasst,
**dadurch gekennzeichnet,**
**dass** mit einem Taktgeber (TG) ein Synchronisationssignal zur Synchronisation der Basisstationen (BS) mit der zugehörigen Funknetz-Steuereinrichtung (RC) über das Stromnetz (10) übertragen wird,
wobei die Anbindung der Basisstationen (BS) an die Funknetz-Steuereinrichtung (RC) separat vom Stromnetz (10) erfolgt.

16. Verfahren nach Anspruch 15,
**dadurch gekennzeichnet,**
**dass** die Stromversorgung der Basisstationen (BS) über ein öffentliches Stromnetz (10) erfolgt.

## Claims

1. Mobile radio communication system, comprising a core network (CN) and a radio communication network (RAN) having at least one radio network controller (RC) to which are connected a plurality of base stations (BS) which communicate by radio with mobile stations (UE) and are supplied with energy via a power supply network (10),
**characterised in that**
there is provided a timing generator (TG) by means of which a synchronisation signal for synchronising the base stations (BS) with the associated radio network controller (RC) is transmitted via the power supply network (10),
the connection of the base stations (BS) to the radio network controller (RC) being present separately from the power supply network (10).

2. Mobile radio communication system according to claim 1,
**characterised in that**
the power supply network (10) is a public mains network.

3. Mobile radio communication system according to claim 1 or 2, **characterised in that**
the synchronisation signal is a timing signal.

4. Mobile radio communication system according to claim 1, 2, or 3,
**characterised in that** the base stations are synchronised among themselves by a synchronisation signal supplied by the signal or timing generator (TG).

5. Mobile radio communication system according to claim 1 or 2,
**characterised in that** the timing generator (TG) is arranged at the location of the radio network controller (RC) and the synchronisation signal is transmitted to the associated base stations (BS) via the power supply network (10).

6. Mobile radio communication system according to claim 1 or 2, **characterised in that**
the timing generator (TG) is arranged separately from the remainder of the system and the synchronisation signal is transmitted to the base stations (BS) via the power supply network.

7. Mobile radio communication system according to any one of the preceding claims,
**characterised in that**
the synchronisation signal is generated by the radio network controller (RC) and transferred to the timing generator (TG) or is transferred from the timing generator (TG) to the radio network controller (RC).

8. Mobile radio communication system according to any one of the preceding claims,
**characterised in that**
the base stations (BS) have a synchronisation signal receiver which taps the synchronisation signal from the power supply and forwards it to the timing module of the base stations (BS).

9. Mobile radio communication system according to any one of the preceding claims,
**characterised in that**
a plurality of base stations (BS) are connected to a radio network controller via a data network (LAN/WAN) and are synchronised via the power supply network.

10. Mobile radio communication system according to claim 9,
**characterised in that**
a plurality of user plane functions (UPF) or control plane functions (CPF) are connected to the data network (LAN/WAN).

11. Mobile radio communication system according to claim 10,
**characterised in that**
at least the user plane functions (UPF) are supplied with the synchronisation signal.

12. Mobile radio communication system according to any one of claims 9 to 11,
**characterised in that**
the data network (LAN/WAN) is based on a packet transmission protocol, e.g. the Internet Protocol (IP).

13. Mobile radio communication system according to claim 1, 2, or 4,
**characterised in that**
the timing generator (TG) is a component of the core network (CN).

14. Mobile radio communication system according to any one of the preceding claims,
**characterised in that**
the mobile radio communication system is embodied such that it supports second-generation standards, enhanced second-generation standards, third-generation standards and/or higher standards.

15. Method for synchronising base stations (BS) of a mobile radio communication system comprising a core network (CN) and a radio communication network (RAN) having at least one radio network controller (RC) to which are connected a plurality of base stations (BS) that communicate by radio with mobile stations (UE) and are supplied with energy via a power supply network (10),
**characterised in that**
a synchronisation signal for synchronising the base stations (BS) with the associated radio network controller (RC) via the power supply network (10) is transmitted by means of a timing generator (TG),
the connection of the base stations (BS) to the radio network controller (RC) being effected separately from the power supply network (10).

16. Method according to claim 15,
**characterised in that**
the power supply to the base stations (BS) is effected via a public mains network (10).

## Revendications

1. Système de communication de téléphonie mobile, comprenant un réseau de coeur (CN) et un réseau de communication radio (RAN) comportant au moins un dispositif de commande de réseau radio (RC), auquel plusieurs stations de base (BS) sont connectées, qui communiquent par radio avec des stations mobiles (UE) et qui sont alimentées en énergie par un réseau électrique (10),
**caractérisé en ce**
**qu'**un générateur d'horloge (TG) est prévu, avec lequel un signal de synchronisation est transmis pour la synchronisation des stations de base (BS) avec le dispositif de commande de réseau radio (RC) afférent via le réseau électrique (10), la connexion des stations de base (BS) au dispositif de commande de réseau radio (RC) étant prévue séparément du réseau électrique (10).

2. Système de communication de téléphonie mobile selon la revendication 1,
**caractérisé en ce**
**que** le réseau électrique (10) est un réseau électrique public.

3. Système de communication de téléphonie mobile selon la revendication 1 ou 2,
**caractérisé en ce**
**que** le signal de synchronisation est un signal d'horloge.

4. Système de communication de téléphonie mobile selon la revendication 1, 2 ou 3,
**caractérisé en ce**
**que** les stations de base sont synchronisées mutuellement par un signal de synchronisation amené par le générateur de signal resp. le générateur d'horloge (TG).

5. Système de communication de téléphonie mobile selon la revendication 1 ou 2,
**caractérisé en ce**
**que** le générateur d'horloge (TG) est installé sur le site d'implantation du dispositif de commande de réseau radio (RC) et en ce que le signal de synchronisation est transmis aux stations de base (BS) afférentes via le réseau électrique (10).

6. Système de communication de téléphonie mobile selon la revendication 1 ou 2,
**caractérisé en ce**
**que** le générateur d'horloge (TG) est disposé séparément du reste du système et en ce que le signal de synchronisation est transmis aux stations de base (BS) via le réseau électrique (10).

7. Système de communication de téléphonie mobile selon l'une des revendications précédentes,
**caractérisé en ce**
**que** le signal de synchronisation est produit par le dispositif de commande de réseau radio (RC) et conduit au générateur d'horloge (TG) ou conduit par le générateur d'horloge (TG) au dispositif de commande de réseau radio (RC).

8. Système de communication de téléphonie mobile selon l'une des revendications précédentes,
**caractérisé en ce**
**que** les stations de base (BS) comportent un récepteur de signaux de synchronisation, qui prélève le signal de synchronisation sur l'alimentation électrique et qui le retransmet au module d'horloge des stations de base (BS).

9. Système de communication de téléphonie mobile selon l'une des revendications précédentes,
**caractérisé en ce**
**que** plusieurs stations de base (BS) sont connectées à un dispositif de commande de réseau radio via un réseau de données (LAN/WAN) et synchronisées par le réseau électrique.

10. Système de communication de téléphonie mobile selon la revendication 9,
**caractérisé en ce**
**que** plusieurs fonctions de niveau d'abonné (UPF) ou fonctions de niveau de commande (CPF) sont raccordées au réseau de données (LAN/WAN).

11. Système de communication de téléphonie mobile selon la revendication 10,
**caractérisé en ce**
**qu'**au moins les fonctions de niveau d'abonné (UPF) sont alimentées en signaux de synchronisation.

12. Système de communication de téléphonie mobile selon l'une des revendications 9 à 11,
**caractérisé en ce**
**que** le réseau de données (LAN/WAN) est basé sur un protocole de communication par paquets, par ex. le protocole Internet (IP).

13. Système de communication de téléphonie mobile selon l'une des revendications 1, 2, ou 4,
**caractérisé en ce**
**que** le générateur d'horloge (TG) est partie intégrante du réseau de coeur (CN).

14. Système de communication de téléphonie mobile selon l'une des revendications précédentes,
**caractérisé en ce**
**que** le système de communication de téléphonie mobile est conçu de sorte à supporter des normes de seconde génération, des normes de seconde génération élargie, des normes de troisième génération et/ou des normes de niveau supérieur.

15. Procédé de synchronisation de stations de base (BS) d'un système de communication de téléphonie mobile, qui comprend un réseau de coeur (CN) et un réseau de communication radio (RAN) avec au moins un dispositif de commande de réseau radio (RC), auquel plusieurs stations de base (BS) sont connectées, qui communiquent par radio avec des stations mobiles (UE) et qui sont alimentées en énergie par un réseau électrique (10),
**caractérisé en ce**
**que** avec un générateur d'horloge (TG) un signal de synchronisation pour la synchronisation des stations de base (BS) est transmis par le dispositif de commande de réseau radio afférent (RC) via le réseau électrique (10), la connexion des stations de base (BS) au dispositif de commande de réseau radio (RC) étant réalisée séparément du réseau électrique (10).

16. Procédé selon la revendication 15,
**caractérisé en ce**
**que** l'alimentation électrique des stations de base (BS) s'effectue par un réseau électrique public (10).
